# EUROPEAN PATENT SPECIFICATION

(11) **EP 2 756 895 B1**
(45) Date of publication and mention of the grant of the patent: **09.11.2016**
(21) Application number: 11872414.5
(22) Date of filing: 14.09.2011
(51) Int. Cl.: B22C 7/02, B29C 67/24

(54) **CLAMPING DEVICE FOR WAX MODEL INJECTION MOLDING MACHINE**
KLEMMVORRICHTUNG FÜR EINE WACHSMODELL-SPRITZGIESSMASCHINE
DISPOSITIF DE SERRAGE POUR MACHINE DE MOULAGE PAR INJECTION DE MODÈLES DE CIRE

(43) Date of publication of application: 23.07.2014
(73) Proprietor: Yasui & Co., Tokyo 154-0001 (JP)
(72) Inventor: YASUI, Shinsaku, Tokyo 154-0001 (JP)
(74) Representative: Grünecker Patent- und Rechtsanwälte PartG mbB
(86) International application number: PCT/JP2011/005193
(87) International publication number: WO 2013/038448

(56) References cited:
- JP-A- 2002 254 137
- JP-A- 2007 237 186

## Description

### Technical Field

The present invention relates to a clamp apparatus. In particular, the present invention relates to a clamp apparatus for a wax model injection molding apparatus used for lost-wax casting.

### Background Art

The lost-wax method is known as one of the methods for precision casting of complex shapes such as metal accessories. The lost-wax casting method consists of the following steps: "a rubber mold molding step of molding a rubber mold (hereinafter, a first step)," "a wax model molding step of molding a wax model using the rubber mold (hereinafter, a second step)," "a casting mold manufacturing step using the wax model (hereinafter, a third step)," "a casting step (hereinafter, a fourth step)," and "a post-step of finishing a cast article obtained in the casting step to obtain a final cast product (hereinafter, a fifth step)." Performing these first to fifth steps in sequence completes the final cast product.

First, in the first step of the rubber mold molding step, a rubber mold having a hollow pattern of the same shape as a final product formed in the inside thereof is made of silicon rubber. Then, in the second step of the wax model molding step, wax is injected into the hollow pattern of the rubber mold to make a wax model. In the third step, the wax model is put into a casting raw material and solidified. Then, the wax model is melted in an electrical furnace to remove the wax, and the casting mold material is baked to produce a casting mold. In the fourth step, a metal material is poured into the casting mold to cast an article. In the fifth step, unnecessary portions are cut off from the cast article and a finishing touch is added by polishing, and the like.

Patent document JP 2007 237186 A discloses a feed/ discharge device for a rubber mold used for a lost-wax-casting method. The device comprises a table for placing the rubber mold thereon. The rubber mold has inclined surfaces, which gradually approach each other from a rear end face of a center axis toward a front end face thereof. The table has guide surfaces, which are brought into contact with the inclined surfaces respectively. Accordingly, positioning of an inlet of the rubber mold and the nozzle of the wax pouring device in the horizontal direction is performed by pushing the rubber mold inward so that the inclined surfaces come into contact with the guide surfaces.

Patent document JP 2002 254137 A discloses an injection molding device capable of injecting heat molten material into the inside of a mold, wherein a reading means capable of reading electronic information which is written in a memory medium arranged in the mold is provided. Based on the electronic information which is read out by the reading means, the injection molding device then performs injection of the heat molten material into the inside of the mold.

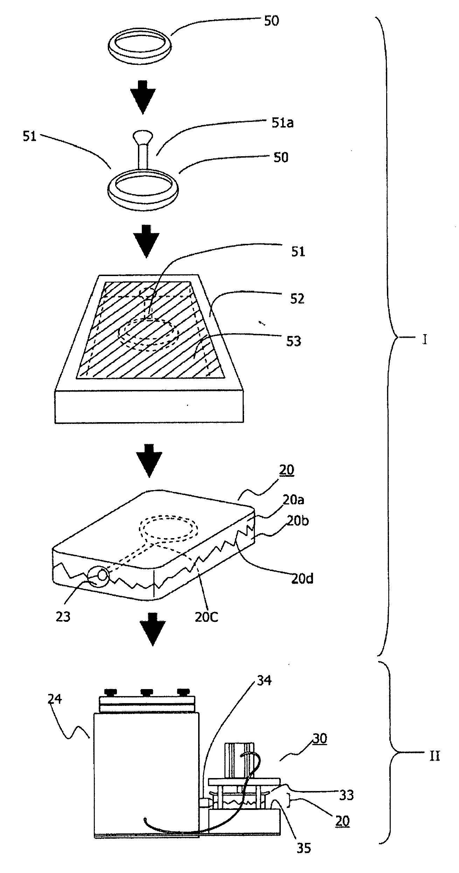

The wax model injection molding apparatus according to the present invention is used in the second step of the wax step. Therefore, more detailed description of the first step of the "rubber mold molding step" in particular, and the second step of the "wax model molding step" will be given with reference to Fig. 5. Fig. 5 is a view schematically showing a flow of the first step and the second step, in particular.

In the rubber mold molding step (part I of Fig. 5), first, a jewelry designer makes a prototype model 50 of the same shape as a final product. Then, a casting runner (sprue) 51a is attached to the prototype model 50 to create a casting mold prototype model 51. After silicon rubber 53 is poured into an outer frame 52 halfway up the sides of the outer frame, the casting mold prototype model 51 is embedded. Over the top of this, the silicon rubber 53 is further poured, and the rubber mold 20 is solidified into a rectangular parallelepiped (box) shape by being pressurized and heated at the same time in the upper-lower direction. The rubber mold 20 is separated halfway at parting surfaces 20d into an upper rubber mold 20a and a lower rubber mold 20b to take out the casting mold prototype model 51. If the parting surfaces 20d are separated in a ruffling manner, the rubber mold 20 can be separated and joined without misalignment. Thus, the rubber mold 20 having a hollow pattern 20c of the casting mold prototype model 51 formed in the inside thereof is completed. In order to introduce wax into the hollow pattern 20c in the subsequent wax model molding step, a wax inlet 23 having such a tapered shape as a wax injection nozzle that properly fits thereto is provided in the rubber mold 20.

In the wax model molding step (part II of Fig. 5) subsequent to the rubber mold molding step, the wax is poured by using a wax injection apparatus 24 as follows. In order to produce a quality cast article, it is important, when pouring the wax into the inside, to pour the wax into the hollow pattern 20c inside the rubber mold 20 at high density. To this end, first, the rubber mold 20 is placed on a rubber mold base 35 on a clamp apparatus 30 so that the wax inlet 23 of the rubber mold 20 is securely joined with a wax injection nozzle 34 of the wax injection apparatus 24. A platen (compression plate) 33 of the clamp apparatus 30 is pressed down to apply contact pressure (hereinafter, clamp pressure) to the rubber mold 20. Then, the wax melted in a furnace of the wax injection apparatus 24 is poured into the hollow pattern 20c through the wax injection nozzle 34 and the wax inlet 23. While the wax is poured, pressure is applied to the inside of the hollow pattern 20c inside the rubber mold 20 to prevent the wax from contracting upon cooling.

### Summary of Invention

### Technical Problem

Since pressure is applied to the inside of the hollow pattern 20c inside the rubber mold 20, a problem when pouring the wax into the hollow pattern 20c at high density is how to impart the "clamp pressure" evenly by the platen 33 to the rubber mold 20 on the clamp 30. Imparting uneven pressure results in partial defects of the product.

To press the rubber mold 20 uniformly, the pressing center is preferably set at the central part of the rubber mold 20 when the rubber mold 20 is horizontally placed. However, the size of the rubber mold 20 varies among the cast products and is not uniform. This makes it difficult to change the pressing part in accordance with the various rubber molds 20.

In addition, even if the pressing part can be changed, it is difficult to lower the platen evenly in the vertical direction at that position of the pressing part. Unless the platen can be lowered evenly, it is difficult to press the rubber mold 20 uniformly.

### Solution to Problem

An object of the invention of the present application is to provide a clamp apparatus regardless of the size of the rubber mold 20.

Another object of the invention of the present application is to provide a clamp apparatus, which is juxtaposed to a wax model injection molding apparatus, including: a mold base having a flat surface on which a mold is placed; a clamp head which is movable in the vertical direction with regard to the mold base; first guide means extending parallel to a moving direction of the clamp head; a pressing member which engages with the first guide member and is movable along the first guide means, wherein the pressing member includes second guide means provided parallel to the flat surface, and the clamp head is movable along the second guide means.

### Advantageous Effects of Invention

According to the present invention, the rubber mold 20 can be uniformly pressed.

### Brief Description of Drawings

Fig. 1 is a side view of a clamp apparatus of the present invention.
Fig. 2 is a front view, in the direction of arrow X of Fig. 1, of the clamp apparatus of the present invention.
Fig. 3 is a view of one state where a clamp head of the present invention is moved.
Fig. 4 is a view of another state where the clamp head of the present invention is moved.
Fig. 5 is a view of an outline flow of the lost-wax method.

### Description of Embodiment

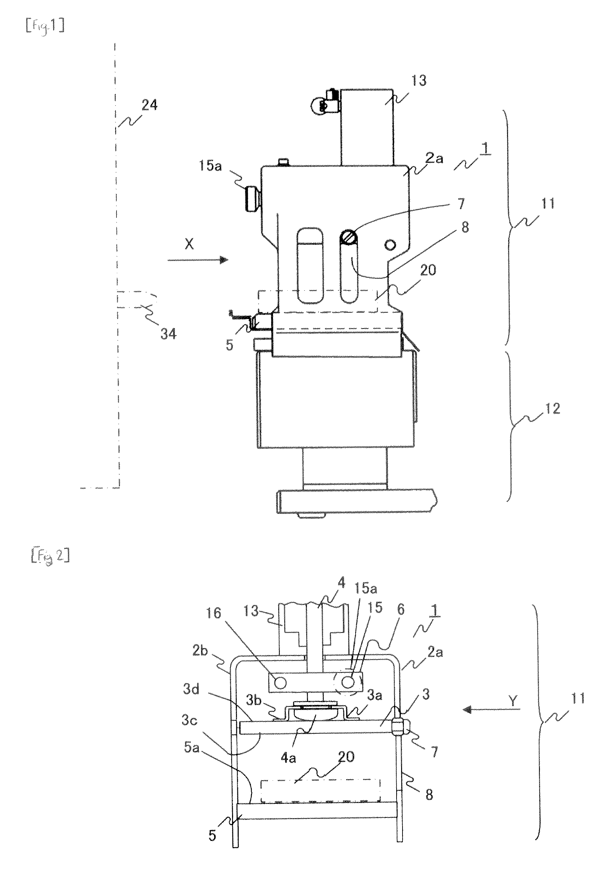

A clamp apparatus 1 will be described with reference to Fig. 1 and Fig. 2. Fig. 1 and Fig. 2 are views showing the clamp apparatus 1 of the present invention. The clamp apparatus 1 is juxtaposed to a wax model injection molding apparatus 24, and is installed so that, when a rubber mold 20 is placed on the clamp apparatus 1, the rubber mold faces the wax injection apparatus 24 and a protruding direction of a wax injection nozzle 34 is perpendicular to a surface of the rubber mold 20 where a wax inlet 23 is located. The wax injection nozzle 34 is inserted into and engaged with the wax inlet 23 by a user pressing a leading end of the wax injection nozzle 34 against a tapered portion of the wax inlet 23. Fig. 2 is a view in the direction of arrow X of Fig. 1. The wax injection nozzle 34 extends in the direction of arrow X of Fig. 1.

The clamp apparatus 1 includes a pressing part 11 and a support base 12. The pressing part 11 includes a mold base 5 having a flat surface 5a, on which the rubber mold 20 is placed, and holding members 2a and 2b. It is preferable that the flat surface 5a is nearly horizontal. The holding members 2a and 2b form two opposite surfaces of a clamp and extend in the vertical direction so as to sandwich the mold base 5 at opposite sides.

For example, a pneumatic air cylinder 13 is provided on the upper side of the holding members 2a and 2b. The air cylinder 13 is provided so that a cylinder shaft 4 is movable along a normal direction of the flat surface 5a. The normal direction of the flat surface 5a is typically the vertical direction, and the cylinder shaft 4 can be raised or lowered so as to come closer to or separate from the flat surface 5a of the mold base 5. A clamp head 4a is provided at a leading end of the cylinder shaft.

First guide means, which extends parallel to a moving direction of the cylinder shaft 4, is provided on the holding members 2a and 2b. The first guide means is, for example, typically an elongated hole 8 drilled through the holding members 2a and 2b, and the outer shape of the elongated hole 8 is formed to be parallel to the moving direction of the cylinder shaft 4. Alternatively, the first guide means may be a rail member provided so as to extend parallel to the moving direction of the cylinder shaft 4.

A platen 3 being a pressing member having a flat surface 3c is provided above the mold base 5. The platen 3 is provided so as to extend while keeping its flat surface 3c nearly parallel to the flat surface 5a. The platen 3 includes a platen guide pin 7 being a protrusion. The width of the platen guide pin 7 substantially corresponds to the width of the elongated hole 8 at the short side. The platen guide pin 7 is inserted into the elongated hole 8 and thereby engaged with the elongated hole 8. Thus, the platen 3 is movable along the elongated hole 8 following the platen guide pin 7. That is, the platen 3 is movable parallel to the moving direction of the cylinder shaft 4, but cannot move in directions at an angle to the moving direction of the cylinder shaft 4.

The platen 3 includes guide rails 3a and 3b being second guide means. The guide rails 3a and 3b extend in the direction in which the wax model injection nozzle 34 protrudes from the wax model injection molding apparatus. The clamp head 4a is larger than the diameter of the cylinder shaft 4. The guide rails 3a and 3b have cross-sections standing from an upper surface 3d of the platen 3 toward the clamp head 4a. From there, the guide rails 3a and 3b are provided so that the width between the guide rail 3a and the guide rail 3b is larger than the diameter of the cylinder shaft 4 but smaller than the clamp head 4a. This allows the guide rails 3a and 3b to sandwich the clamp head 4a, whereby the platen 3 and the clamp head 4a are connected. It is preferable that grooves are formed in the clamp head 4a and respective ends of the guide rails 3a and 3b are fitted into these grooves to sandwich the clamp head 4a. In the state where the platen 3 and the clamp head 4a are connected, the platen 3 is provided so as to keep its flat surface 3c nearly parallel to the flat surface 5a. Alternatively, the platen 3 may be a hollow member, and the second guide means may be an elongated hole drilled in the upper surface of the platen 3. By retracting the clamp head 4a to the inside of the platen 3 and protruding the cylinder shaft 4 from the elongated hole, the second guide means sandwiches the clamp head 4a, whereby the platen 3 and the clamp head 4a are connected. Then, the extending direction of the elongated hole may be aligned with the extending direction of the wax model injection nozzle 34.

A screw member 15, which extends parallel to the flat surface 5a and along the protruding direction of the injection nozzle 34 of the wax model injection molding apparatus 24, is provided in the pressing part 11. The screw member 15 is supported at two support positions 15b and 15c, and is held rotatably by a clamp member. A knob 15a is provided at one end of the screw portion. In addition, a guide bar 16 is provided so as to be parallel to the flat surface 5a as well as to the screw member 15.

The cylinder shaft 4 passes through a cylinder bearing 6 being a block member in the vertical direction. Two parallel holes are provided in the cylinder bearing 6 so as to be perpendicular to the cylinder shaft 4. One of the two holes is a through-hole in which such a threaded portion as that corresponds to the screw portion of the screw member 15 is provided, and the other is a through-hole without the threaded portion. The screw member 15 is thread-fitted into the through-hole with the threaded portion provided therein, while the guide bar 16 is insert-fitted into the through-hole without the threaded portion. Rotating the knob 15a of the screw member 15 allows the cylinder bearing 6 to reciprocate along the thread and along the protruding direction of the injection nozzle 34 of the wax model injection molding apparatus 24.

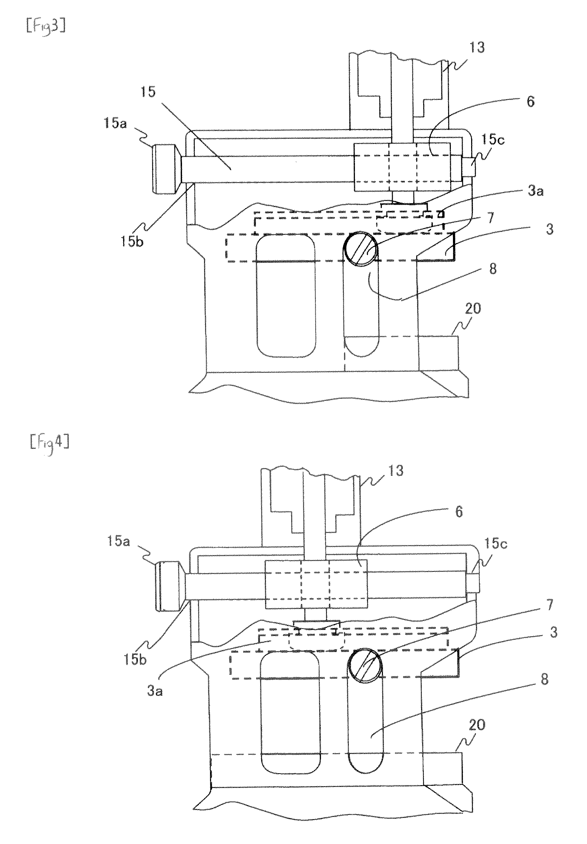

Next, how the clamp apparatus 1 of the present invention works will be described with reference to Fig. 3 and Fig. 4. Fig. 3 and Fig. 4 are views showing an internal mechanism of the clamp viewed in the direction of arrow Y of Fig. 2. The right side in Fig. 3 is the side where the injection nozzle 34 of the wax model injection molding apparatus 24 is provided.

Fig. 3 shows a state where the relatively small rubber mold 20 is placed on the mold base 5 of the clamp apparatus 1. In this case, the center of the rubber mold 20 is closer to the side of the wax model injection molding apparatus 24. Here, the knob 15a of the screw member 5 is rotated to move the cylinder bearing 6 toward the injection nozzle 34 of the wax model injection molding apparatus 24. The clamp head 4a moves along the guide rails 3a and 3b. When the clamp head 4a is positioned at the pressing center of the rubber mold 20, the cylinder 13 is actuated to lower the clamp head 4a. The clamp head 4a presses down the platen 3 and applies appropriate pressure to the rubber mold 20.

Next, Fig. 4 shows a state where the relatively large rubber mold 20 is placed on the mold base 5 of the clamp apparatus 1. The knob 15a of the screw member 5 is rotated to move the cylinder bearing 6 in the direction away from the injection nozzle 34 of the wax model injection molding apparatus 24. This causes the cylinder clamp head 4a to move along the guide rails 3a and 3b. When the clamp head 4a is positioned at the pressing center of the rubber mold 20, the cylinder 13 is actuated to lower the clamp head 4a. The clamp head 4a presses down the platen 3 and applies appropriate pressure to the rubber mold 20. In both cases of Fig. 3 and Fig. 4, regardless of the position of the clamp head 4a, since the elongated hole 8 is drilled along the moving direction of the clamp head 4a, even when the position of the clamp head 4a changes with regard to the injection nozzle 34 of the wax model injection molding apparatus 24, the position of the platen 3 does not change. That is, regardless of the size of the rubber mold 20, the rubber mold can be pressured always at the same position.

### Industrial Applicability

The invention of the present application can be applied to a clamp for a wax model injection molding apparatus used for lost-wax casting.

### Reference Signs List

- 1: Clamp for wax model injection molding apparatus
- 2a, 2b: Holding members
- 3: Platen
- 4a: Clamp head
- 5: Mold base
- 6: Block member (cylinder bearing)

## Claims

1. A clamp apparatus (1) juxtaposed to a wax model injection molding apparatus (24), comprising:
a mold base (5) having a flat surface (5a) on which a mold (20) is placed;
a clamp head(4a) movable in a vertical direction with regard to the mold base (5);
first guide means (8) extending parallel to a moving direction of the clamp head (4a); and
a pressing member (3) which engages with the first guide member and is movable along the first guide means (8) in a vertical direction, wherein the pressing member (3) sandwiches the mold placed on the mold base between the mold base and the pressing member in a vertical direction; and
second guide means (3a, 3b) which engages with the clamp head, the second guide means (3a, 3b) being capable of moving the pressing member (3) in a vertical direction, the second guide means (3a, 3b) being capable of moving the clamp head (4a) in one direction parallel to the flat surface.

2. A clamp apparatus (1) according to claim 1, wherein the clamp apparatus (1) is placed with the wax model injection molding apparatus (24), wherein the one direction is a direction in which an injection nozzle (34) of the wax model injection molding apparatus (24) protrudes.

3. A clamp apparatus (1) according to claim 2, wherein the clamp apparatus includes:
a screw member (15) which extends along the protruding direction of the injection nozzle (34) of the wax model injection molding apparatus (24); and
a block member (6) engaged with thread-fitting to a screw portion of the screw member(15),
wherein the clamp head (4a) passes through the block member(6), the clamp head (4a) being movable in a direction parallel to the flat surface (5a) of the clamp head (24) by rotating the screw member (15).

4. A clamp apparatus (1) according to claim 1, wherein the first guide means (8) is an elongated hole (8) provided in a vertical direction in a member holding the pressing member (3), and the pressing member (3) has a protrusion (7) which engages with the elongated hole (8).

5. A clamp apparatus (1) according to claim 1, wherein the second guide means (3a, 3b) sandwiches the clamp head(4a), whereby the pressing member (3) is connected with the clamp head (4a).

## Patentansprüche

1. Klemmvorrichtung (1) in einer benachbarten Anordnung zu einer Wachsmodell-Spritzgießvorrichtung (24), umfassend:
eine Formbasis (5) mit einer flachen Fläche (5a), auf der eine Form (20) platziert wird,
einen Klemmkopf (4a), der in einer vertikalen Richtung in Bezug auf die Formbasis (5) bewegt werden kann,
eine erste Führungseinrichtung (8), die sich parallel zu einer Bewegungsrichtung des Klemmkopfs (4a) erstreckt, und
ein Drückglied (3), das in das erste Führungsglied eingreift und entlang der ersten Führungseinrichtung (8) in einer vertikalen Richtung bewegt werden kann, wobei das Drückglied (3) die auf der Formbasis platzierte Form zwischen der Formbasis und dem Drückglied in einer vertikalen Richtung einschließt, und
eine zweite Führungseinrichtung (3a, 3b), die in den Klemmkopf eingreift, wobei die zweite Führungseinrichtung (3a, 3b) das Drückglied (3) in einer vertikalen Richtung bewegen kann, wobei die zweite Führungseinrichtung (3a, 3b) den Klemmkopf (4a) in einer Richtung parallel zu der flachen Fläche bewegen kann.

2. Klemmvorrichtung (1) nach Anspruch 1, wobei die Klemmvorrichtung (1) mit der Wachsmodell-Spritzgießvorrichtung (24) platziert wird, wobei die eine Richtung eine Richtung ist, in der eine Spritzdüse (34) der Wachsmodell-Spritzgussvorrichtung (24) vorsteht.

3. Klemmvorrichtung (1) nach Anspruch 2, wobei die Klemmvorrichtung umfasst:
ein Schraubglied (15), das sich entlang der Vorstehrichtung der Spritzdüse (34) der Wachsmodell-Spritzgießvorrichtung (24) erstreckt, und
ein Blockglied (6), das schraubend in einen Schraubteil des Schraubglieds (15) eingreift,
wobei sich der Klemmkopf (4a) durch das Blockglied (6) erstreckt und der Klemmkopf (4a) in einer Richtung parallel zu der flachen Fläche (5a) des Klemmkopfs (24) bewegt werden kann, indem das Schraubglied (15) gedreht wird.

4. Klemmvorrichtung (1) nach Anspruch 1, wobei die erste Führungseinrichtung (8) ein längliches Loch (8) ist, das in einer vertikalen Richtung in einem das Drückglied (3) haltenden Glied vorgesehen ist, und das Drückglied (3) einen in das längliche Loch (8) eingreifenden Vorsprung (7) aufweist.

5. Klemmvorrichtung (1) nach Anspruch 1, wobei die zweite Führungseinrichtung (3a, 3b) den Klemmkopf (4a) einschließt, wodurch das Drückglied (3) mit dem Klemmkopf (4a) verbunden wird.

## Revendications

1. Appareil de serrage (1) juxtaposé à un appareil de moulage par injection de modèle de cire (24), comprenant :
une base de moule (5) ayant une surface plane (5a) sur laquelle est placé un moule (20) ;
une tête de serrage (4a) mobile dans une direction verticale par rapport à la base de moule (5) ;
un premier moyen de guidage (8) s'étendant de manière parallèle à une direction de déplacement de la tête de serrage (4a) ; et
un élément de pression (3) qui vient en prise avec le premier élément de guidage et est mobile le long du premier moyen de guidage (8) dans une direction verticale, dans lequel l'élément de pression (3) prend le moule placé sur la base de moule en sandwich entre la base de moule et l'élément de pression dans une direction verticale ; et
un deuxième moyen de guidage (3a, 3b) qui vient en prise avec la tête de serrage, le deuxième moyen de guidage (3a, 3b) étant apte à déplacer l'élément de pression (3) dans une direction verticale, le deuxième moyen de guidage (3a, 3b) étant apte à déplacer la tête de serrage (4a) dans une direction parallèle à la surface plane.

2. Appareil de serrage (1) selon la revendication 1, dans lequel l'appareil de serrage (1) est placé avec l'appareil de moulage par injection de modèle de cire (24), dans lequel ladite une direction est une direction selon laquelle une buse d'injection (34) de l'appareil de moulage par injection de modèle de cire (24) fait saillie.

3. Appareil de serrage (1) selon la revendication 2, dans lequel l'appareil de serrage comprend :
un élément de vis (15) qui s'étend le long de la direction de saillie de la buse d'injection (34) de l'appareil de moulage par injection de modèle de cire (24) ; et
un élément de bloc (6) en prise par filetage avec une partie de vis de l'élément de vis (15),
dans lequel la tête de serrage (4a) passe à travers l'élément de bloc (6), la tête de serrage (4a) étant mobile dans une direction parallèle à la surface plane (5a) de la tête de serrage (24) par rotation de l'élément de vis (15).

4. Appareil de serrage (1) selon la revendication 1, dans lequel le premier moyen de guidage (8) est un trou allongé (8) prévu dans une direction verticale dans un élément maintenant l'élément de pression (3), et l'élément de pression (3) a une saillie (7) qui vient en prise avec le trou allongé (8).

5. Appareil de serrage (1) selon la revendication 1, dans lequel le deuxième moyen de guidage (3a, 3b) prend la tête de serrage (4a) en sandwich, moyennant quoi l'élément de pression (3) est relié à la tête de serrage (4a).
